(19) Europäisches Patentamt
European Patent Office
Office européen des brevets

(11) Veröffentlichungsnummer: **0 343 341 A2**

(12) **EUROPÄISCHE PATENTANMELDUNG**

(21) Anmeldenummer: **89105345.6**

(51) Int. Cl.⁴: **D06M 17/00**

(22) Anmeldetag: **25.03.89**

(30) Priorität: **25.05.88 DE 3817663**

(43) Veröffentlichungstag der Anmeldung:
**29.11.89 Patentblatt 89/48**

(84) Benannte Vertragsstaaten:
**CH DE ES FR GB IT LI NL**

(71) Anmelder: **HÜLS AKTIENGESELLSCHAFT**
**Patentabteilung / PB 15 - Postfach 13 20**
**D-4370 Marl 1(DE)**

(72) Erfinder: **Simon, Ulrich, Dipl.-Ing. (FH)**
**Hügelstrasse 25**
**D-4690 Herne 1(DE)**
Erfinder: **Scholten, Heinz, Dr.**
**Rehwinkel 3**
**D-4358 Haltern 7(DE)**

(54) **Textile Fixiereinlagen.**

(57) Es sollen Fixiereinlagen mit verbesserter Beständigkeit gegen heißes Wasser und gegen Lösemittel zur Verfügung gestellt werden.

Dies wurde erreicht durch textile Fixiereinlagen, die mit einem Schmelzkleber beschichtet sind, wobei der Schmelzkleber zu
90 bis 99 Gew.-% aus einem Copolyamid mit einem Schmelzpunkt im Bereich von 80 bis 140 °C und einer Lösungsviskosität $eta_{rel}$ im Bereich von 1,3 bis 1,7
und zu
1 bis 10 Gew.-% aus einem Isocyanat der allgemeinen Formel (A)

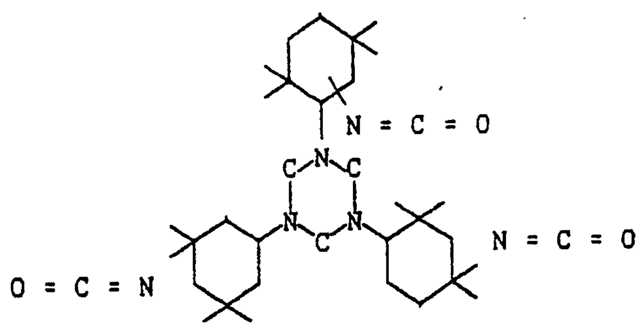

(A)

besteht.

Mit Hilfe der Erfindung gelingt es, Fixiereinlagen mit den gewünschten verbesserten Eigenschaften herzustellen.

EP 0 343 341 A2

## Textile Fixiereinlagen

Gegenstand der Erfindung sind textile Fixiereinlagen, die nach dem Pulverpunktverfahren mit einem Schmelzkleber beschichtet sind.

Schmelzkleber hierfür auf Basis von Copolyamiden sind seit langem bekannt. Derartige Schmelzkleber haben sich gut bewährt. Verbesserte Produkte werden erhalten, wenn zusätzlich Melaminharze als Vernetzungsmittel eingesetzt werden (DE-OS 23 07 346).

Als nachteilig bei den Systemen mit Vernetzungsmitteln hat sich die Aufbereitung erwiesen. Es ist erforderlich, die beiden Stoffe in der Schmelze zu mischen, ohne daß bereits eine Vernetzung eintreten darf. Dies gilt auch für den Zeitpunkt des Auftrages. Während des Fixiervorganges soll die gewünschte Vernetzung dann jedoch innerhalb von 10 bis 20 Sekunden ablaufen.

Im Hinblick darauf wären geblockte Isocyanate als Vernetzungsmittel als günstig einzustufen. In Fachkreisen werden geblockte Isocyanate jedoch als bedenklich bezeichnet (Dermil Research Ltd. - Technical Report vom 11.07.85), da sie toxische und korrosive Verbindungen abspalten.

Aufgabe der Erfindung war es, textile Fixiereinlagen zu entwickeln, die eine verbesserte Wasch- und Reinigungsbeständigkeit aufweisen.

Diese Aufgabe wurde durch Verwendung eines Schmelzklebers gelöst, der zu
90 bis 99 Gew.-% aus einem Copolyamid mit einem Schmelzpunkt im Bereich von 80 bis 140 °C und einer Lösungsviskosität $eta_{rel}$ im Bereich von 1,3 bis 1,7
und zu
1 bis 10 Gew.-% aus einem Isocyanat der allgemeinen Formel (A)

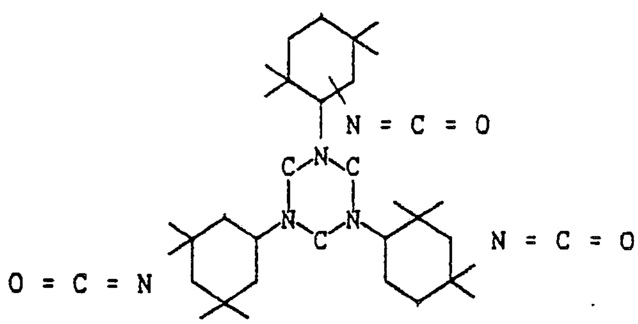

(A)

besteht.

Als Fixiereinlagen werden Gewebe, Gewirke und Vliese eingesetzt, die sowohl aus natürlichen als auch aus synthetischen Fasern hergestellt sein können. Es können auch verschiedene Fasertypen miteinander kombiniert werden. Geeignete Einlagen werden in Peter Sroka, "Handbuch der textilen Fixiereinlagen", 2. Auflage 1983, Sinus-Verlag GmbH, Krefeld, Seiten 28 bis 35, beschrieben.

Für den Schmelzkleber werden für diesen Zweck bekannte Copolyamide eingesetzt. Sie werden aus mindestens drei, Polyamide bildenden Monomeren, wie Lactame und/oder Salze aus Dicarbonsäuren und Diaminen, hergestellt. Statt der Salze können auch Dicarbonsäuren und Diamine getrennt in den Reaktionskessel eingebracht werden.

Bevorzugte Copolyamide weisen nachstehende Monomerzusammensetzung (Gew.-%) auf:
40 % Laurinlactam, 30 % Caprolactam, 30 % AH-Salz;
60 % Laurinlactam, 20 % Caprolactam, 20 % AH-Salz;
25 % Laurinlactam, 25 % Caprolactam, 25 % Aminoundecansäure und 25 % Azelainsäure/Hexamethylendiamin;
60 % Laurinlactam, 20 % Caprolactam, 20 % Adipinsäure/Isophorondiamin;
40 % Laurinlactam, 30 % Caprolactam, 30 % Dodecandisäure/Methyl-Pentamethylendiamin.

Weitere für Schmelzkleber brauchbare Copolyamide werden in den DE-PSS 12 53 499, 15 94 233 und den DE-OSS 19 39 758, 23 24 159, 23 24 160, 24 36 430, 29 20 416, 32 48 776, 25 09 736 beschrieben.

Die Copolyamide weisen einen Schmelzpunkt im Bereich von 80 bis 140 °C, vorzugsweise von 90 bis 136 °C, auf. Sie besitzen eine Lösungsviskosität $eta_{rel}$ im Bereich von 1,3 bis 1,7.

Die zweite Komponente weist die nachstehende Formel (A) auf

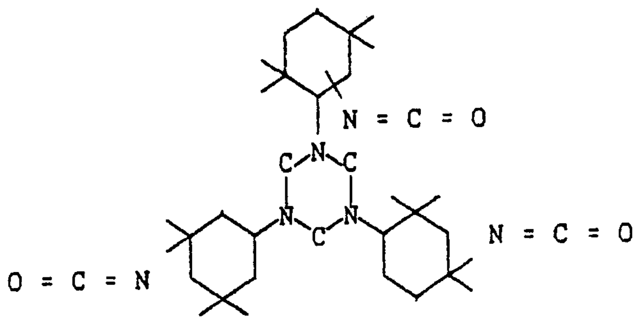

(A)

Die Herstellung des Isocyanates wird in US-PS 3 918 218 beschrieben.

Die Schmelzkleber enthalten 90 bis 99 Gew.-% eines oder mehrerer der genannten Copolyamide sowie 1 bis 10 Gew.-% des Isocyanats der allgemeinen Formel (A).

Die erfindungsgemäßen Fixiereinlagen werden nach dem Pulverpunktverfahren beschichtet. Das Auftragsgewicht der Schmelzkleber liegt im Bereich von 10 bis 28 g/m$^2$, vorzugsweise von 18 bis 24 g/m$^2$.

Die erfindungsgemäßen Fixiereinlagen weisen - unter Beibehaltung guter Allgemeineigenschaften - insbesondere eine extreme Waschbeständigkeit und einen verminderten Krumpf auf.

Die Haftfestigkeit wurde gemäß DIN 54 310 bestimmt.

Mit Buchstaben gekennzeichnete Versuche sind nicht erfindungsgemäß.

## Beispiele

### Versuche 1 bis 4 und A

Ein Isocyanat gemäß der allgemeinen Formel (A) wird zu einem Pulver mit einem mittleren Durchmesser von < 200 u gemahlen und mit einem Co polyamid (Laurinlactam: 60 Gew.-%, Caprolactam: 25 Gew.-%, Salz aus Hexamethylendiamin und Adipinsäure: 15 Gew.-%; $F_p$: 135 °C; $eta_{rel}$: 1,5) in einem Pulvermischer gemischt. Der so erhaltene Schmelzkleber wird mit einer Pulverpunktanlage (System Saladin) unter Verwendung einer 28 mesh-Auftragswalze auf eine Baumwollwäscheeinlage (Flächengewicht: 80 g/m$^2$) aufgetragen. Die beschichtete Einlage wird auf einer Bügelpresse gegen einen handelsüblichen Hemdenoberstoff (Polyester/Baumwoll-Mischgewebe fixiert (Fixierzeit: 20 sec; Druck: 1 500 hPa; Temperatur: 160 °C).

Der Schmelzkleber von Versuch A enthielt kein Isocyanat.

### Versuche 5 und B

Das in den Versuchen 1 bis 4 verwendete Copolyamid wird durch eines mit folgender Monomer-Zusammensetzung (Laurinlactam: 40 Gew.-%, Caprolactam: 30 Gew.-%, Salz aus äquivalenten Mengen von Methyl-Pentamethylendiamin und Dodecandisäure: 30 Gew.-%; $F_p$: 108 °C; $eta_{rel}$: 1,55) ersetzt.

Der Schmelzkleber von Versuch B enthält kein Isocyanat.

Die Weiterverarbeitung und -behandlung erfolgt wie bei den Beispielen 1 bis 4 angegeben.

### Versuch 6

Das in den Versuchen 1 bis 4 verwendete Copolyamid wird durch eines mit folgender Monomer-Zusammensetzung [Laurinlactam: 40 Gew.-%, Caprolactam: 30 Gew.-%, Salz aus Dodecandisäure und (5 Gew.-% im Überschuß) Methyl-Pentamethylendiamin: 30 Gew.-%; $F_p$: 108 °C; $eta_{rel}$: 1,44] ersetzt.

Die Weiterverarbeitung und -behandlung erfolgt wie oben angegeben.

Zur Bestimmung der Haftung werden 30 x 5 cm große Streifen hergestellt. Diese werden ohne Vorbehandlung, nach 10 Kochwäschen in einer Haushaltswaschmaschine und nach zehnmaliger kommerzieller chemischer Reinigung in einer ZWICK-Zerreißmaschine gerissen.

Die Ergebnisse sind der nachfolgenden Tabelle zu entnehmen.

Tabelle

| Versuch | Anteil *) Isocyanat [%] | Auftragsgewicht [g/m²] | Haftfestigkeit [N/5 cm] | | |
|---|---|---|---|---|---|
| | | | ohne Vorbeh. | n. Wäsche | n. Reinigung |
| 1 | 1 | 12 | Abriß | 12 | 22 |
| 2 | 3 | 12 | Abriß | 14 | 26 |
| 3 | 5 | 12 | Abriß | 13 | 24 |
| 4 | 10 | 13 | Abriß | 18 | 24 |
| A | ohne | 12 | 20 | 5 | 19 |
| 5 | 5 | 13 | Abriß | 1 | 22 |
| B | ohne | 14 | Abriß | Ablösung | 20 |
| 6 | 5 | 11 | 15 | 6 | 20 |

*) im Schmelzkleber

**Ansprüche**

1. Textile Fixiereinlage, die nach dem Pulverpunktverfahren mit einem Schmelzkleber beschichtet ist, wobei der Schmelzkleber zu
90 bis 99 Gew.-% aus einem Copolyamid mit einem Schmelzpunkt im Bereich von 80 bis 140 °C und einer Lösungsviskosität $eta_{rel}$ im Bereich von 1,3 bis 1,7
und zu
1 bis 10 Gew.-% aus einem Isocyanat der allgemeinen Formel (A)

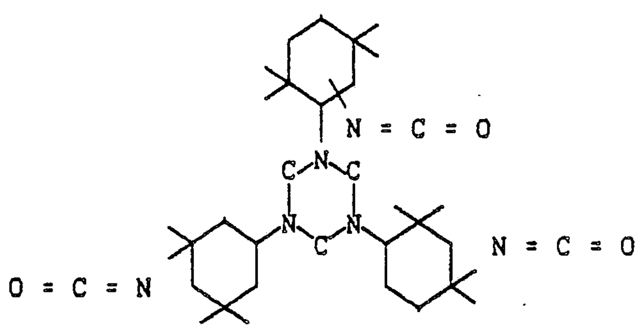

(A)

besteht.